# EUROPEAN PATENT APPLICATION

(11) **EP 4 697 479 A1**
(43) Date of publication of application: **18.02.2026**
(21) Application number: 25758442.5
(22) Date of filing: 19.02.2025
(51) Int. Cl.: H01M 50/403, H01M 50/417, H01M 50/491, H01M 50/451, H01M 50/446, G06F 30/20, G06T 17/00

(54) **METHOD AND DEVICE FOR GENERATING THREE-DIMENSIONAL SEPARATOR STRUCTURE, AND METHOD AND DEVICE FOR CALCULATING MORPHOLOGICAL PARAMETERS OF THREE-DIMENSIONAL SEPARATOR STRUCTURE GENERATED THEREBY**

(30) Priority: 22.02.2024 KR 20240025653
(71) Applicant: LG Energy Solution, Ltd., Seoul 07335 (KR)
(72) Inventor: PARK, Joonam, Daejeon 34122 (KR); PARK, Sun Ho, Daejeon 34122 (KR); LEE, Hojin, Daejeon 34122 (KR); KIM, Hyeongseok, Daejeon 34122 (KR); LEE, Bora, Daejeon 34122 (KR); JUNG, Eunjoo, Daejeon 34122 (KR)
(74) Representative: Plasseraud IP
(86) International application number: PCT/KR2025/002376
(87) International publication number: WO 2025/178359

(57) **Abstract**

The present disclosure relates to a method and a device for forming a three-dimensional separator structure, and a method and device for calculating shape parameters of the three-dimensional separator structure formed thereby. The method of forming the three-dimensional separator structure according to an embodiment of the present disclosure includes a separator former determining the size of a domain and voxels based on design parameters input into a processor for a separator structure, selecting a polyethylene separator weaving algorithm or a polypropylene separator weaving algorithm based on components of the separator structure and whether the separator structure is multi-layered, and forming a separator within the domain using the selected algorithm and the design parameters.

## Description

### [Technical Field]

### CROSS-REFERENCE TO RELATED APPLICATION

This application claims priority to and the benefit of Korean Patent Application No. 10-2024-0025653 filed at the Korean Intellectual Property Office on February 22, 2024, the entire contents of which are incorporated herein by reference.

The present disclosure relates to a method and a device for forming a three-dimensional separator structure, and a method and device for calculating shape parameters of the three-dimensional separator structure formed thereby.

### [Background Art]

Digital twin technology is a technology that creates a twin of a real-world object in a virtual space on a computer and predicts the results by simulating situations that may occur in reality. This digital twin technology may be utilized in the research and development of rechargeable batteries.

That is, by modeling a three-dimensional electrode structure of a rechargeable battery in a virtual space on a computer using the digital twin technology and verifying the characteristics of the formed three-dimensional electrode structure, the cost and time used in the actual rechargeable battery process may be reduced. Accordingly, Korean Publication Patent Application No. 10-2021-0063821 discloses "a method of modeling a three-dimensional electrode structure using digital twin technology."

On the other hand, batteries include not only electrodes but also separators as components. However, the related art only discloses the content of modeling a three-dimensional electrode structure as described above. Therefore, there is a problem in that it is difficult to verify the separator among the battery components because verification of the characteristics of the separator cannot be performed according to the related art.

### [Disclosure]

### [Technical Problem]

The present disclosure attempts to provide a method and device for forming a three-dimensional separator structure for a separator among battery components, and a method and device for calculating shape parameters of the three-dimensional separator structure formed thereby.

### [Technical Solution]

A method of forming a three-dimensional separator structure according to an embodiment of the present disclosure includes a separator former determining the size of a domain and voxels based on design parameters input into a processor for a separator structure, selecting at least one of a polyethylene separator weaving algorithm and a polypropylene separator weaving algorithm based on components of the separator structure and whether the separator structure is multi-layered, and forming a separator within the domain using the selected algorithm and the design parameter.

The selecting of the algorithm may include selecting either the polyethylene separator weaving algorithm or the polypropylene separator weaving algorithm based on the components of the separator structure in the case where the separator structure is single-layered.

The selecting of the algorithm may include selecting the polyethylene separator weaving algorithm and the polypropylene separator weaving algorithm in the case where the separator structure is multi-layered, and the forming of the separator may include forming a polyethylene separator using the polyethylene separator weaving algorithm, forming a polypropylene separator using the polypropylene separator weaving algorithm, and laminating the polypropylene separator on the polyethylene separator to form the separator.

The forming of the separator may include, in the case where the selected algorithm is the polyethylene separator weaving algorithm, forming a polyethylene separator with a fiber structure shape based on the design parameter, determining whether a formation error of the polyethylene separator is within a preset error range, and in the case where the formation error is outside the preset error range, reforming the polyethylene separator by changing the conditions related to the formation of the polyethylene separator.

The forming of the separator may include, in the case where the selected algorithm is the polypropylene separator weaving algorithm, forming a polypropylene separator based on the design parameters and forming a micro-level spheroidal pore in the polypropylene separator, reforming the spheroidal pore by changing the conditions related to the formation of the spheroidal pore until the formation error of the polypropylene separator in which the spheroidal pore is formed falls within the preset error range, forming a nano-level long spherical pore in a polypropylene separator having the spheroidal pore formed based on the design parameter, and reforming the long spherical pore by changing the conditions related to the formation of the long spherical pore until the formation error of the polypropylene separator in which the long spherical pore is formed falls within the preset error range.

The method of forming the three-dimensional separator structure according to another embodiment of the present disclosure may further include the processor determining whether formation of a coating layer is necessary based on the design parameter, and in the case where it is determined that the formation of the coating layer is necessary, a coating layer former generating a ceramic particle and a binder within the domain using the design parameter, and laminating the ceramic particle and the binder on the separator to form the coating layer.

The forming of the coating layer may include determining whether the formation error of the ceramic particles is within the preset error range, and in the case where the formation error of the ceramic particles is outside the preset error range, regenerating the ceramic particles by changing the conditions related to the generation of the ceramic particles.

The forming of the coating layer may include determining whether the binder is generated within a pore formed within the coating layer, and in the case where the binder is generated outside the pore, removing the binder generated outside the pore, and changing the conditions related to the generation of the binder to regenerate the binder, and gradually growing the binder generated within the pore, and in the case where the grown binder is generated outside the pore or the formation error of the grown binder does not fall within a preset error range, removing the volume of the grown binder, changing the growth direction of the binder, and regrowing the binder.

The method of forming the three-dimensional separator structure according to another embodiment of the present disclosure may further include the processor determining whether a lamination simulation is necessary based on machine parameters input for the separator structure, in the case where the lamination simulation is necessary, a lamination simulator simulating rolling of the separator using the machine parameter, and in the case where a deformation error of the rolled separator is outside the preset error range, correcting the volume of the separator after the rolling simulation based on the volume difference of the separator before and after rolling.

The method of forming the three-dimensional separator structure according to another embodiment of the present disclosure may further include the processor determining whether swelling simulation is necessary based on the machine parameters input for the separator structure, in the case where the swelling simulation is necessary, the swelling simulator simulating expansion of the coating layer using the swelling factor and the machine parameter, and in the case where the deformation error of the expanded coating layer is outside the preset error range, correcting the volume of the coating layer after the simulating of the expansion based on the difference in the volume of the coating layer before and after the expansion.

A method of calculating shape parameters of a three-dimensional separator structure formed by the method of forming the three-dimensional separator structure according to an embodiment of the present disclosure further includes the processor calculating shape parameters for the three-dimensional separator structure using physical property parameters input for the three-dimensional separator structure.

A device for forming a three-dimensional separator structure according to an embodiment of the present disclosure includes a processor that determines whether formation of a coating layer is necessary, whether a lamination simulation is necessary, and whether a swelling simulation is necessary based on design parameters and machine parameters, a separator former that determines the size of a domain and voxels based on the design parameters and uses a polyethylene separator weaving algorithm or a polypropylene separator weaving algorithm based on components of the separator structure and whether the separator structure is multi-layered to form a separator within the domain, a coating layer former that generates a ceramic particle and a binder within the domain using the design parameter, and laminating the ceramic particle and the binder on the separator to form the coating layer, a lamination simulator that simulates rolling of the separator using the machine parameters and corrects the deformation error of the rolled separator to simulate lamination, and a swelling simulator that simulates expansion of the coating layer by using a swelling factor and the machine parameters and corrects the deformation error of the expanded coating layer to simulate swelling.

The separator former may select either the polyethylene separator weaving algorithm or the polypropylene separator weaving algorithm based on the components of the separator structure in the case where the separator structure is single-layered, and form the separator using the selected algorithm and the design parameter.

The separator former may, in the case where the separator structure is multi-layered, form a polyethylene separator using the polyethylene separator weaving algorithm, form a polypropylene separator using the polypropylene separator weaving algorithm, and laminate the polypropylene separator on the polyethylene separator to form the separator.

The polyethylene separator weaving algorithm may form a polyethylene separator with a fiber structure shape based on the design parameter, and in the case where the formation error is outside the preset error range, and may reform the polyethylene separator by changing the conditions related to the formation of the polyethylene separator.

The polypropylene separator weaving algorithm may form a polypropylene separator based on the design parameters and a micro-level spheroidal pore in the polypropylene separator, and form a nano-level long spherical pore in a polypropylene separator having the spheroidal pore formed based on the design parameter.

The polypropylene separator weaving algorithm may reform the spheroidal pore by changing the conditions related to the formation of the spheroidal pore until the formation error of the polypropylene separator in which the spheroidal pore is formed falls within the preset error range.

The polypropylene separator weaving algorithm may reform the long spherical pore by changing the conditions related to the formation of the long spherical pore until the formation error of the polypropylene separator in which the long spherical pore is formed falls within the preset error range.

The coating layer former may, in the case where the formation error of the ceramic particles is outside the preset error range, regenerate the ceramic particles by changing the conditions related to the generation of the ceramic particles.

The coating layer former may, in the case where the binder is generated outside the pore formed within the coating layer, remove the binder generated outside the pore, and change the conditions related to the generation of the binder to regenerate the binder.

The coating layer former may gradually grow the binder generated within the pore, and in the case where the grown binder is generated outside the pore or the formation error of the grown binder does not fall within the preset error range, the volume of the grown binder may be removed, the growth direction of the binder may be changed, and the binder may be regrown.

The lamination simulator may, in the case where the deformation error of the rolled separator is outside the preset error range, correct the volume of the separator after the rolling simulation based on the volume difference of the separator before and after rolling.

The swelling simulator may, in the case where the deformation error of the expanded coating layer is outside the preset error range, correct the volume of the coating layer after the simulating of the expansion based on the difference in the volume of the coating layer before and after the expansion.

In a device for calculating shape parameters of a three-dimensional separator structure formed by the device for forming the three-dimensional separator structure described above according to an embodiment of the present disclosure, the processor may calculate the shape parameters for the three-dimensional separator structure using physical property parameters input for the three-dimensional separator structure.

### [Advantageous Effects]

According to an embodiment of the present disclosure, it is possible to predict the performance of a battery cell that varies, depending on the separator design conditions, and also suggest a direction for improvement accordingly.

Effects that may be obtained from the present disclosure are not limited to only those mentioned above, and other effects which are not described herein would be apparent to those skilled in the art from the following description.

### [Description of the Drawings]

FIG. 1 is a flow chart of a method of forming a three-dimensional separator structure according to an embodiment of the present disclosure.
FIG. 2 is a flow chart of a separator simulation step according to an embodiment of the present disclosure.
FIG. 3 and FIG. 4 are flowcharts for describing an algorithm selection step and a separator formation step according to an embodiment of the present disclosure.
FIG. 5 is an example of the three-dimensional separator structure formed by the separator simulation step according to an embodiment of the present disclosure.
FIG. 6 is a flowchart of a coating layer simulation step according to an embodiment of the present disclosure.
FIG. 7 is an example of a coating layer formed by a ceramic particle generating step according to an embodiment of the present disclosure.
FIG. 8 is a flowchart of a binder generation step according to an embodiment of the present disclosure.
FIG. 9 is an example of a coating layer formed by the binder generation step according to an embodiment of the present disclosure.
FIG. 10 is a flow chart of a lamination simulation step according to an embodiment of the present disclosure.
FIG. 11 is an example of the three-dimensional separator structure in which lamination simulation was performed by the lamination simulation step according to an embodiment of the present disclosure.
FIG. 12 is a flowchart of a swelling simulation step according to an embodiment of the present disclosure.
FIG. 13 is an example of the three-dimensional separator structure in which swelling simulation was performed by the swelling simulation step according to an embodiment of the present disclosure.
FIG. 14 is a block diagram of a device for forming the three-dimensional separator structure and a device for calculating shape parameters of the three-dimensional separator structure according to an embodiment of the present disclosure.

### [Mode for Invention]

When describing the embodiments disclosed in the present disclosure, if it is determined that a detailed description of a related known technology may obscure the gist of the embodiments disclosed in this specification, such a detailed description is omitted. The accompanying drawings are intended only to facilitate understanding of the exemplary embodiments disclosed in this specification, and it is to be understood that the technical ideas disclosed herein are not limited by the accompanying drawings and include all modifications, equivalents, or substitutions that are within the range of the ideas and technology of the present disclosure.

Although the terms "first," "second," and the like are used to explain various components, the components are not limited to such terms. These terms are only used to distinguish one component from another component.

It is to be understood that when one component is referred to as being "connected" or "coupled" to another component, it may be connected or coupled directly to another component or there may be other intervening components. On the other hand, it is to be understood that when one component is referred to as being "connected or coupled directly" to another component, there are no other intervening components.

Throughout the specification, the terms "comprise" and "have" are intended to specify the presence of stated features, integers, steps, operations, components, or a combination thereof, but do not preclude the presence or addition of one or more other features, integers, steps, operations, components, or combinations thereof.

Hereinafter, the present disclosure is described in detail with reference to the attached drawings.

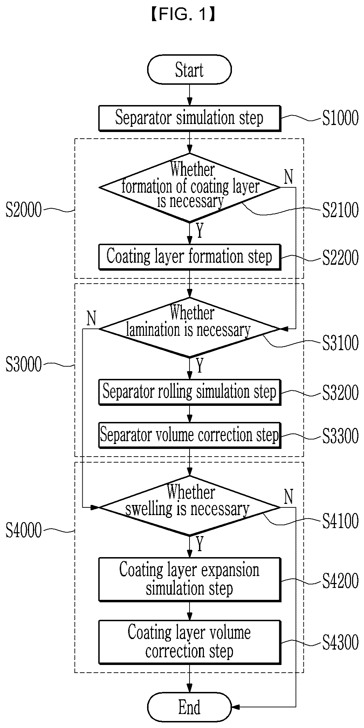

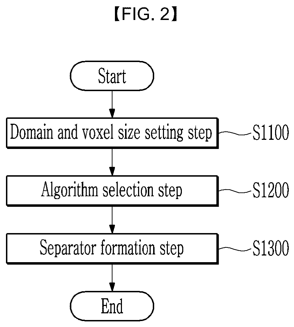

FIG. 1 is a flow chart of a method of forming a three-dimensional separator structure according to an embodiment of the present disclosure, and FIG. 2 is a flow chart of a separator simulation step according to an embodiment of the present disclosure.

Referring to FIGS. 1 and 2, the method of forming the three-dimensional separator structure according to an embodiment of the present disclosure may include a separator simulation step (S1000). Additionally, the separator simulation step (S1000) may include a domain and voxel-size setting step (S1100), an algorithm selection step (S1200), and a separator formation step (S1300). That is, the method of forming the three-dimensional separator structure according to the present disclosure may form the three-dimensional separator structure by forming a separator within a domain using the separator simulation step (S1000).

According to an embodiment, the method of forming the three-dimensional separator structure may further include a coating layer simulation step (S2000), a lamination simulation step (S3000), or a swelling simulation step (S4000), depending on the design parameters of the three-dimensional separator structure formed through the separator simulation step (S1000). On the other hand, the swelling simulation step (S4000) relates to a coating layer, which is one of the components of the separator structure, and may be performed only when a coating layer is formed on the separator structure by the coating layer simulation step (S2000).

The separator simulation step (S1000) may be performed by a separator former 200, the coating layer simulation step (S2000) may be performed by a coating layer former 300, the lamination simulation step (S3000) may be performed by a lamination simulator 400, and the swelling simulation step (S4000) may be performed by a swelling simulator 500. In this case, each former and simulator may receive parameters necessary to perform each step from a processor 100.

Additionally, the processor 100 may determine whether formation of the coating layer is necessary, whether the lamination simulation is necessary, and whether swelling simulation is necessary based on the design parameter. In this case, the processor 100 may generate and transmit a control signal for performing each step of the coating layer simulation step (S2000), the lamination simulation step (S3000), and the swelling simulation step (S4000) according to the determined result.

That is, the method of forming the three-dimensional separator structure according to the present disclosure forms the three-dimensional separator structure according to each design condition of the separator structure, thereby allowing analysis of design parameters that vary according to each design condition.

Hereinafter, each step of the method of forming the three-dimensional separator structure will be described in more detail with reference to FIGS. 2 to 11.

In the separator simulation step (S1000), the separator former (200) may determine the size of the domain and voxel based on the design parameters input for the three-dimensional separator structure, and form a separator within the domain using the design parameter.

Referring to FIG. 2, the separator simulation step (S1000) according to an embodiment of the present disclosure may include the domain and voxel-size setting step (S1100), the algorithm selection step (S1200), and the separator formation step (S1300).

In the domain and voxel-size setting step (S1100), the separator former 200 may set the domain and voxel sizes based on the design parameters input to the processor 100 for the separator structure. That is, the separator former 200 may receive the design parameters from the processor 100 and set the size of the domain and voxels based on the received design parameters.

Here, the design parameters refer to variables required to form the three-dimensional separator structure, and may include, depending on the embodiment, the thickness of the separator, the porosity, the average pore diameter, the size of the domain and voxels, or the like.

According to an embodiment, the size of the domain set through the domain and voxel-size setting step (S1100) may be set based on the thickness of the separator, and the size of the voxels may be set based on the size of the domain. For example, the length of each side of the domain may be set to a value greater than or equal to the thickness of the separator and less than or equal to three times the thickness of the separator. Additionally, the size of the voxels may be set to 1/10^{N} (where N is a natural number greater than or equal to 2) based on the size of the domain. However, the size setting of the domain and the voxels is not limited thereto, and may be set by the user and input as the design parameters through the processor 100, depending on the embodiment.

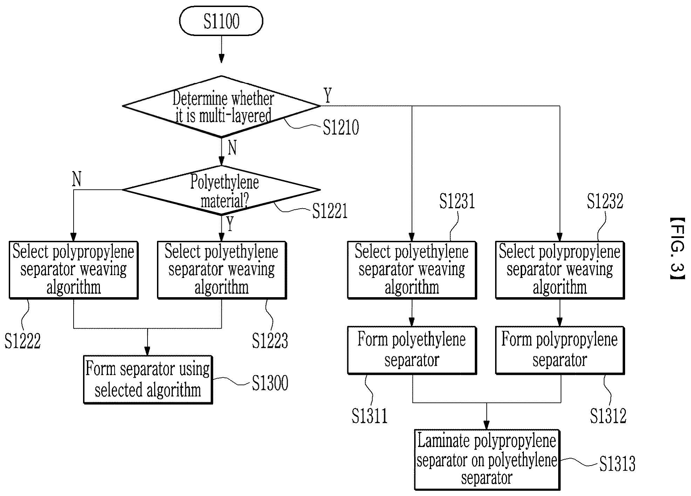

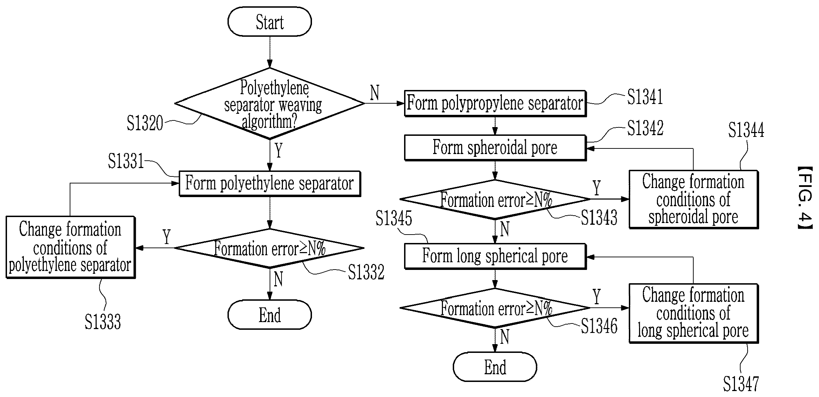

FIG. 3 and FIG. 4 are flowcharts for describing an algorithm selection step and a separator formation step according to an embodiment of the present disclosure.

Referring to FIG. 3, in the algorithm selection step (S1200), the separator former 200 may select a polyethylene separator weaving algorithm or a polypropylene separator weaving algorithm based on whether the separator structure is multi-layered and the component of the separator structure. Additionally, in the separator formation step (S1300), the separator may be formed using a selected algorithm.

Here, whether the separator structure is multi-layered refers to whether the separator structure includes one separator or two or more separators. Additionally, the components of the separator structure refer to the materials included in the separator. In this case, the components of the separator structure may include polyethylene or polypropylene.

According to an embodiment, whether the separator structure is multi-layered and the components of the separator structure may be included in the design parameters, or may be set by the user and input as separate parameters through the processor 100. For example, parameters such as "single-layered" and "polyethylene" may be input to the separator former 200 through the processor 100.

That is, the separator former 200 may determine what material configures the separator structure and whether the separator structure is single-layered or multi-layered based on the components of the separator structure received from the processor 100 and whether the separator structure is multi-layered. Additionally, the separator former 200 may select an algorithm used for separator formation based on the determined result.

According to an embodiment, the algorithm selection step (S1200) may include a step of determining whether the separator structure is multi-layered (S1210), and a step (S1223) of selecting the polyethylene separator weaving algorithm or a step (S1222) of selecting the polypropylene separator weaving algorithm based on the components of the separator structure (S1221) in the case where the separator structure is not multi-layered (i.e., in the case where the separator structure is single-layered). At this time, in the separator formation step (S1300), the separator former 200 may form a polyethylene separator or a polypropylene separator within the domain using the selected algorithm and the design parameters.

For example, in the case where the separator structure is determined to be single-layered, the separator former 200 may select either the polyethylene separator weaving algorithm or the polypropylene separator weaving algorithm, depending on the components of the separator structure, and form a separator using the selected algorithm.

According to an embodiment, the algorithm selection step (S1200) may include the step of determining whether the separator structure is multi-layered (S1210), a step of selecting the polyethylene separator weaving algorithm (S1231) and a step of selecting the polypropylene separator weaving algorithm (S1232) in the case where the separator structure is multi-layered. At this time, in the separator formation step (S1300), the separator former 200 may form the polyethylene separator using the polyethylene separator weaving algorithm (S1311), form the polypropylene separator using the polypropylene separator weaving algorithm (S1312), and form the separator by laminating the polypropylene separator on the polyethylene separator (S1313).

For example, in the case where the separator structure is determined to be multi-layered, the separator former 200 may first form the polyethylene separator using the polyethylene separator weaving algorithm, then form the polypropylene separator using the polypropylene separator weaving algorithm, and then form the polypropylene separator by laminating the polypropylene separator on the polyethylene separator.

That is, the separator former 200 selects either the polyethylene separator weaving algorithm or the polypropylene separator weaving algorithm in the case where the separator structure is single-layered, whereas the separator former 200 may select both the polyethylene separator weaving algorithm and the polypropylene separator weaving algorithm in the case where the separator structure is multi-layered.

Referring to FIG. 4, in the separator formation step (S1300) according to an embodiment of the present disclosure, the process of forming the separator differs, depending on the algorithm selected in the algorithm selection step (S1200).

For example, in the case where the polyethylene separator weaving algorithm is selected in the algorithm selection step (S1200), the separator formation step (S1300) may include a step (S1331) of forming the polyethylene separator with a fiber structure shape based on the design parameters, a step (S1332) of determining whether a formation error of the polyethylene separator is within the preset error range, and a step (S1333) of reforming the polyethylene separator by changing the conditions related to the formation of the polyethylene separator in the case where the formation error is outside the preset error range.

That is, in the case where the polyethylene separator weaving algorithm is selected, the polyethylene separator may be repeatedly formed while changing the conditions related to the formation of the polyethylene separator until the formation error of the polyethylene separator falls within a preset range. Here, the conditions related to the formation of the polyethylene separator may be changed by changing the value of the random seed.

According to an embodiment, whether the formation error of the polyethylene separator is within the preset error range may be determined to be outside the preset error range in the case where the value is greater than or equal to an arbitrary number. At this time, an arbitrary number may be set by the user and input through the processor 100.

According to an embodiment, the formation error of the polyethylene separator may be a value calculated by dividing the difference between the porosity of the separator input as the design parameters and the porosity of the polyethylene separator formed within the domain by the porosity of the input separator.

On the other hand, in the case where the polypropylene separator weaving algorithm is selected in the algorithm selection step (S1200), the separator formation step (S1300) may include: forming the polypropylene separator based on the design parameters (S1341), forming a micro-level spheroidal pore in the polypropylene separator (S1342), reforming the spheroidal pore by changing the conditions related to the formation of the spheroidal pore (S1344) until the formation error of the polypropylene separator in which the spheroidal pore is formed falls within the preset error range (S1343), forming a nano-level long spherical pore in the polypropylene separator having the spheroidal pore formed based on the design parameters (S1345), and reforming the long spherical pore by changing the conditions related to the formation of the long spherical pore (S1347) until the formation error of the polypropylene separator in which the long spherical pore is formed falls within the preset error range (S1346).

That is, in the case where the polypropylene separator weaving algorithm is selected, the spheroidal pore may be repeatedly formed while changing the conditions related to the formation of the spheroidal pore until the formation error of the polypropylene separator in which the spheroidal pore is formed falls within the preset error range. In addition, after the formation of the spheroidal pore is completed, the long spherical pore may be repeatedly formed while changing the conditions related to the formation of the long spherical pore until the formation error of the polypropylene separator in which the long spherical pore is formed falls within a preset range. In this case, the polypropylene separator having the long spherical pore formed refers to both the micro-level spheroidal pore and the nano-level spheroidal pore being formed in the polypropylene separator. Here, the conditions related to the formation of the spheroidal pore and the long spherical pore may be changed by changing the value of the random seed.

According to an embodiment, whether the formation error of the polypropylene separator in which the spheroidal pore is formed and the polypropylene separator in which the long spherical pore is formed are within the preset error range may be determined to be outside the preset error range in the case where the value is greater than or equal to an arbitrary number. At this time, an arbitrary number may be set by the user and input through the processor 100.

According to an embodiment, the formation error of each polypropylene separator may be a value calculated by dividing the difference between the porosity of the separator input as the design parameters and the porosity of the polypropylene separator formed within the domain by the porosity of the input separator.

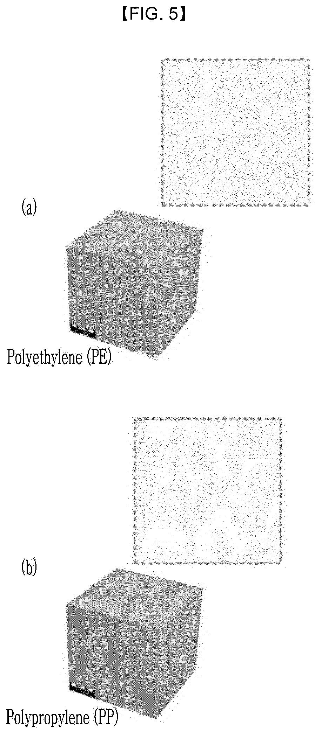

FIG. 5 is an example of the three-dimensional separator structure formed by the separator simulation step according to an embodiment of the present disclosure.

FIG. 5A is an example of the polyethylene separator, and FIG. 5B is an example of the polypropylene separator. Referring to FIGS. 5A and 5B, it can be seen that the three-dimensional separator structure formed by the separator simulation step (S1000) according to an embodiment of the present disclosure has pores of different shapes, depending on the components (i.e., materials) of the separator structure.

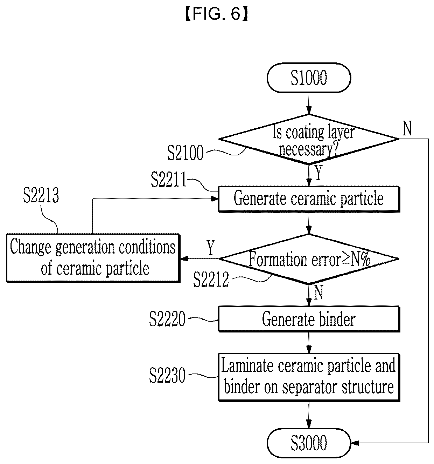

FIG. 6 is a flowchart of a step of simulating a coating layer according to an embodiment of the present disclosure.

Referring to FIGS. 1 and 6, the coating layer simulation step (S2000) according to an embodiment of the present disclosure may include a step (S2100) of determining whether the coating layer is necessary and a coating layer formation step (S2200).

In the step (S2100) of determining whether the coating layer is necessary, the processor 100 may determine whether formation of the coating layer is necessary, based on the design parameters. At this time, in the case where formation of the coating layer is determined to be necessary, the processor 100 may generate a control signal for forming the coating layer and transmit the control signal to the coating layer former 300.

According to an embodiment, the processor 100 may determine that formation of the coating layer is necessary when the design parameters include parameters for forming the coating layer.

Additionally, according to an embodiment, the processor 100 may determine whether formation of the coating layer is necessary, based on whether a signal including a command to form the coating layer is received from the outside. In the cases where the coating layer formation step is performed according to an external command, parameters for forming the coating layer may be provided to the processor 100 from the outside.

According to an embodiment, the design parameters may include variables for forming the coating layer. Here, variables for forming the coating layer may include the loading level of the coating layer, material content and true density, average diameter and sphericity of ceramic particles, and quantified binder ratio (QBR) of a binder.

According to an embodiment, the number of design parameters utilized may increase, such as when applying multiple ceramic particles or when changing the design of the inactive material. For example, when applying one type of ceramic particle, one design parameter may be used, and when applying two types of ceramic particles, two design parameters may be used. In this case, each design parameter may include the loading level of the ceramic particles, the material content and true density of the separator structure, the average diameter and sphericity of the ceramic particles, and the QBR of the binder.

In the coating layer formation step (S2200), the coating layer former 300 may receive a control signal for forming the coating layer from the processor 100, generate ceramic particles and a binder within the domain using the design parameters, and laminate the ceramic particles and the binder on the separator to form the coating layer.

According to an embodiment, the coating layer formation step (S2200) may include a ceramic particle generation step (S2210), a binder generation step (S2220), and a ceramic particle and binder lamination step (S2230).

In the ceramic particle generation step (S2210), the coating layer former 300 may generate ceramic particles within the domain (S2211). Here, ceramic particles may be generated using random sequential absorption (RSA) or discrete element method (DEM).

According to an embodiment, the ceramic particle generation step (S2210) may include a step of determining whether the formation error of the ceramic particles is within the preset error range (S2212), and a step of regenerating the ceramic particles by changing the conditions related to the generation of the ceramic particles (S2213) in the case where the formation error of the ceramic particles is outside the preset error range. That is, in the ceramic particle generation step (S2210), the coating layer former 300 may repeatedly form ceramic particles while changing the conditions related to the formation of ceramic particles until the formation error of the ceramic particles falls within a preset range. Here, the conditions related to the formation of ceramic particles may be changed by changing the value of the random seed.

According to an embodiment, whether the formation error of the ceramic particles is within the preset error range (S2212) may be determined to be outside the preset error range in the case where the formation error value of the ceramic particles is greater than an arbitrary number. At this time, an arbitrary number may be set by the user and input through the processor 100.

According to an embodiment, the formation error of the ceramic particles may be a value calculated by dividing the difference between the loading level of the ceramic particles input as the design parameters and the loading level of the ceramic particles formed within the domain by the loading level of the input ceramic particles.

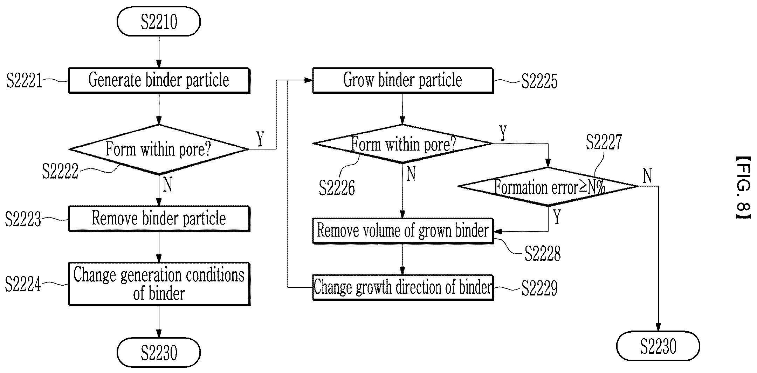

The binder generation step (S2220) will be described in detail below with reference to FIG. 8.

In the ceramic particle and binder lamination step (S2230), the coating layer former 300 may form the coating layer by laminating the ceramic particles and binder generated through the ceramic particle generating step (S2210) and the binder generation step (S2220) described above onto the separator.

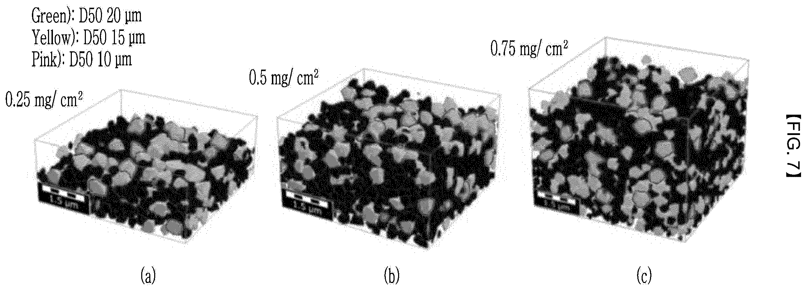

FIG. 7 is an example of a coating layer formed by a ceramic particle generating step according to an embodiment of the present disclosure.

As shown in FIG. 7, in the coating layer generated through the ceramic particle generation step (S2210) according to an embodiment of the present disclosure, a first particle 71 having an average diameter of 20 µm, a second particle 72 having an average diameter of 15 µm, and a third particle 73 having an average diameter of 10 µm are generated. Additionally, the sphericity of the particles generated in the coating layer are different from each other.

That is, referring to FIG. 7, it can be seen that according to the ceramic particle generation step (S2210) according to an embodiment of the present disclosure, it is possible to generate ceramic particles having different diameter sizes and degrees of sphericity.

FIGS. 7(a) to (c) are examples of coating layers formed when the loading levels of ceramic particles are 0.25 mg/cm², 0.5 mg/cm², and 0.75 mg/cm², respectively. It shows that the coating layer with controlled loading level of ceramic particles may be simulated according to the ceramic particle generation step (S2210) according to an embodiment of the present disclosure.

FIG. 8 is a flowchart of a binder generation step according to an embodiment of the present disclosure.

Referring to FIG. 8, in the binder generation step (S2220), the coating layer former 300 may generate the binder within the pore formed within the coating layer using the design parameters and grow the binder generated within the pore. Here, the binder may be generated using the RSA and particle growth algorithms based on the QBR value of the binder.

According to an embodiment, the binder generation step (S2220) may include steps of regenerating the binder (S2221 to S2224) and steps of regrowing the binder (S2225 to S2229).

In the steps of regenerating the binder (S2221 to S2224), the coating layer former 300 may generate the binder within the domain (S2221), determine whether the binder is generated within the pore formed within the coating layer (S2222), and in the case where the binder is generated outside the pore, remove the binder generated outside the pore (S2223), and regenerate the binder by changing the conditions related to binder generation (S2224). That is, the steps of regenerating the binder (S2221 to S2224) may be performed repeatedly until the binder generated in the domain is contained within the pore. Here, the conditions related to binder generation may be changed by changing the value of the random seed related to binder generation.

The steps of regrowing the binder (S2225 to S2229) may include a step of gradually growing the binder generated within the pore (S2225), a step of removing the volume of the grown binder (S2228) and a step of changing the growth direction of the binder to regrow the binder (S2229) in the case where the grown binder is generated outside the pore (S2226) or the formation error of the grown binder does not fall within the preset error range (S2227). That is, the steps of regrowing the binder (S2225 to S2229) may be repeatedly performed until the entire volume of the grown binder is contained within the pore and the formation error of the binder falls within the preset error range. Here, the binder growth direction may be changed by changing the value of the random seed related to the growth of the binder.

According to an embodiment, whether the formation error of the binder falls within the preset error range may be determined to be outside the preset error range in the case where the value is greater than or equal to an arbitrary number. At this time, an arbitrary number may be set by the user and input through the processor 100.

According to an embodiment, the formation error of the binder may be a value calculated by dividing the difference between the loading level of the binder input as the design parameters and the loading level of the binder particle formed within the domain by the loading level of the input binder.

On the other hand, it would be preferable for the binder to be grown in a stepwise manner so as not to invade the ceramic particle region. This is to prevent overlap between the ceramic particles and the binder generated within the domain. In this case, the ceramic particle region refers to a region formed for voxels within the domain to which the property is allocated as ceramic particles. Additionally, growing in a stepwise manner so as not to invade the ceramic particle region means that the binder is grown over voxels that are located around the voxels whose properties are allocated as ceramic particles.

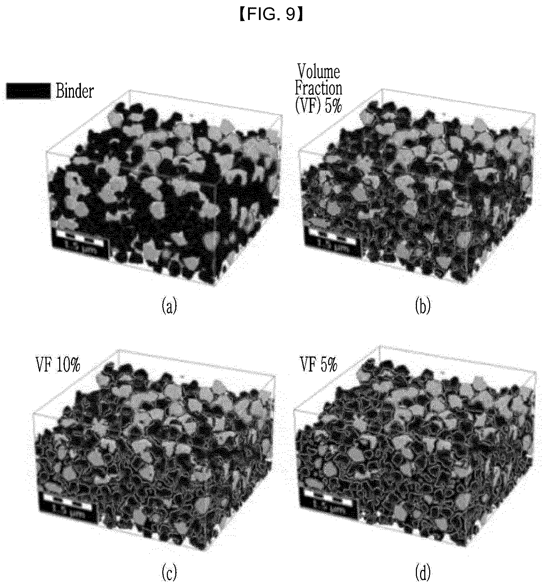

FIG. 9 is an example of a coating layer formed by the binder generation step according to an embodiment of the present disclosure.

FIGS. 9(a) to 9(d) are examples of coating layers having a volume fraction (VF) of 0%, 5%, 10%, and 15%, respectively. That is, referring to FIG. 9, it can be seen that according to the binder generation step (S2220) according to an embodiment of the present disclosure, it is possible to control the content of the binder generated in the coating layer.

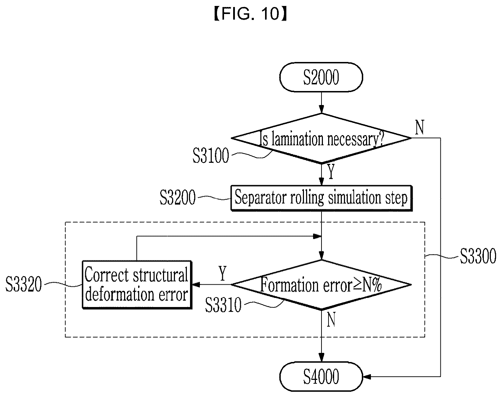

FIG. 10 is a flow chart of a lamination simulation step according to an embodiment of the present disclosure.

Referring to FIGS. 1 and 10, the lamination simulation step (S3000) according to an embodiment of the present disclosure may include a step (S3100) of determining whether lamination is necessary, a separator rolling simulation step (S3200), and a separator volume correction step (S3300).

In the step of determining whether lamination is necessary (S3100), the processor 100 may determine whether the lamination simulation is necessary based on the machine parameters. In this case, the processor 100 may generate a control signal for the lamination simulation and transmit the control signal to the lamination simulator 400 if the processor determines that the lamination stimulation is necessary.

According to an embodiment, the processor 100 may determine that the lamination simulation is necessary when the machine parameters are input.

According to an embodiment, the machine parameters may include variables necessary to perform the lamination simulation. For example, the machine parameters may include the thickness, Young's modulus, Poisson's ratio, yield stress, hardening modulus, or failure stress of the separator after rolling.

Additionally, according to an embodiment, the processor 100 may determine whether the lamination simulation is necessary based on whether a signal including a command to perform the lamination simulation is received from the outside. In the case where the separator rolling simulation step (S3200) and the separator volume correction step (S3300) are performed according to an external command, parameters for the lamination simulation may be provided to the processor 100 from the outside. In the separator rolling simulation step (S3200), in the case where the lamination simulation is determined to be necessary, the lamination simulator 400 receives a control signal from the processor 100 and simulates the rolling of the separator using the machine parameters. That is, the lamination simulator 400 may simulate the rolling of the separator for the three-dimensional separator structure in which the separator formation is completed or for the three-dimensional separator structure in which the separator and coating layer formation are completed. According to an embodiment, in the separator rolling simulation step (S3200), the lamination simulator 400 may calculate the machine parameters reflecting a bilinear hardening model and a damage model, and connect the strain-displacement equation and the equilibrium equation to simulate displacement and stress of each material of the components included in the three-dimensional separator structure according to the strain, thereby simulating the compression of the separator.

In the separator volume correction step (S3300), in the case where a deformation error of the rolled separator is outside the preset error range, the lamination simulator 400 may correct the volume of the separator after the rolling simulation based on the volume difference of the separator before and after rolling. That is, the separator volume correction step (S3300) may be repeatedly performed until the deformation error of the separator falls within the preset error range.

According to an embodiment, the separator volume correction step (S3300) may include a step (S3310) of determining whether the deformation error of the separator is within the preset error range and a step (S3320) of correcting the structural deformation error of the separator until the deformation error is within the preset error range.

Here, the deformation error of the separator may be determined based on the volume of the separator. For example, the deformation error of the separator may be the difference between the volume of the separator before rolling and the volume after rolling divided by the volume before rolling.

According to an embodiment, whether the deformation error of the separator is within the preset error range may be determined to be outside the preset error range in the case where the deformation error value of the separator is greater than or equal to an arbitrary number. At this time, an arbitrary number may be set by the user and input through the processor 100.

In the step (S3320) of correcting the structural deformation error of the separator, the lamination simulator 400 may change the allocation group of voxels located on the surface of the separator in the case where the deformation error of the separator is outside the preset error range. For example, in the case where the volume of the separator is excessively reduced after rolling and the deformation error exceeds the preset error range, the lamination simulator 400 may reduce the deformation error by increasing the volume of the separator after rolling by changing the property allocated to the voxels located on the surface of the separator to the separator.

In some embodiments, when there are multiple voxels located on the surface of the separator, the allocation groups of the multiple voxels may be changed one by one until the deformation error falls within the preset error range.

That is, the present disclosure may compensate for the structural deformation of the three-dimensional separator structure caused by rolling simulation by increasing or decreasing the number of voxels corresponding to the separator.

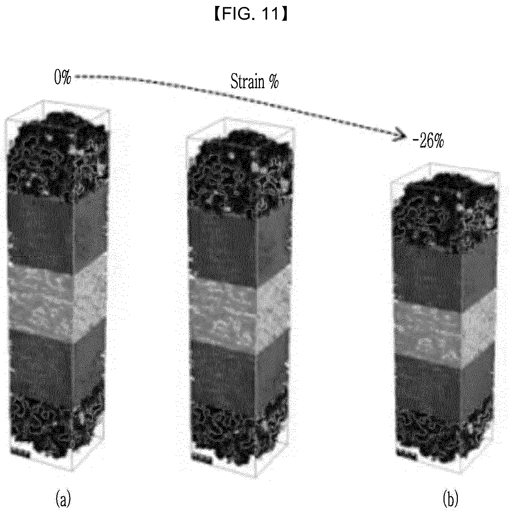

FIG. 11 is an example of the three-dimensional separator structure in which the lamination simulation was performed by the lamination simulation step according to an embodiment of the present disclosure.

As shown in FIG. 11, the lamination simulation according to an embodiment of the present disclosure may form the three-dimensional separator structure according to the degree of rolling. FIG. 11 is an example of a process for rolling an arbitrary separator structure to a thickness of 74% of its original thickness.

That is, by using the three-dimensional separator structure formed through the lamination simulation step (S3000) according to an embodiment of the present disclosure, it is possible to check the change in the characteristics of the three-dimensional separator structure before and after the lamination simulation step (S3000), as shown in Table 1 below.

**(Table 1)**

| | Before lamination simulation | After lamination simulation |
|---|---|---|
| Separator thickness (µm) | 14.96 | 11.1 |
| Separator porosity (%) | 43.01 | 28.48 |
| Coating layer porosity (%) | 46.17 | 33.54 |
| Pore D50 size within separator (nm) | 400 | 300 |
| Pore D50 size within coating layer (nm) | 500 | 400 |
| Tortuosity of separator | 1.733 | 2.684 |
| Tortuosity of coating layer | 2.475 | 4.599 |

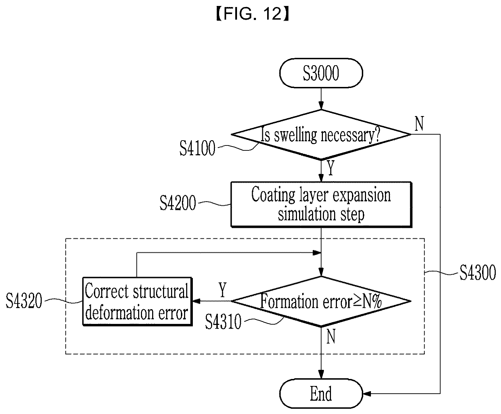

FIG. 12 is a flowchart of a swelling simulation step according to an embodiment of the present disclosure.

Referring to FIGS. 1 and 12, the swelling simulation step (S4000) according to an embodiment of the present disclosure may include a step (S4100) of determining whether the swelling is necessary, a coating layer expansion simulation step (S4200), and a coating layer volume correction step (S4300).

In the step (S4100) of determining whether the swelling is necessary, the processor 100 may determine whether swelling simulation is necessary based on the machine parameters. At this time, in the case where swelling simulation is determined to be necessary, the processor 100 may generate a control signal for swelling simulation and transmit it to the swelling simulator 500.

According to an embodiment, the processor 100 may determine that swelling simulation is necessary when the machine parameters are input. At this time, the machine parameters may include variables necessary to perform swelling simulation.

Additionally, according to an embodiment, the processor 100 may determine whether swelling simulation is necessary based on whether a signal including a command to perform swelling simulation is received from the outside. When the coating layer swelling simulation step (S4200) and the coating layer volume correction step (S4300) are performed according to an external command, parameters for swelling simulation may be provided to the processor 100 from the outside.

In the coating layer expansion simulation step S4200, in the case where the swelling simulation is determined to be necessary, the swelling simulator 500 receives a control signal from the processor 100 and simulates expansion of the coating layer using the swelling factor and the machine parameters. That is, the swelling simulator 500 may simulate the coating layer expansion for the three-dimensional separator structure in which the separator and coating layer formation have been completed.

According to an embodiment, in the coating layer expansion simulation step (S4200), the coating layer simulator 500 may calculate the swelling factor and the machine parameters reflecting the bilinear hardening model and the damage model, and connect the strain-displacement equation and the equilibrium equation to simulate displacement and stress of each material of the components included in the three-dimensional separator structure according to the strain, thereby simulating the expansion of the coating layer.

In the coating layer volume correction step (S4300), in the case where the deformation error of the expanded coating layer simulated by the swelling simulator 500 is outside the preset error range, the volume of the coating layer after the expansion simulation may be corrected based on the difference in the volume of the coating layer before and after expansion. That is, the coating layer volume correction step may be performed repeatedly until the deformation error of the coating layer falls within the preset error range.

According to an embodiment, the coating layer volume correction step (S4300) may include a step (S4310) of determining whether the deformation error of the coating layer is within the preset error range and a step (S4320) of correcting the structural deformation error of the coating layer until the deformation error falls within the preset error range.

Here, the deformation error of the coating layer may be determined based on the volume of the coating layer. For example, the deformation error of the coating layer may be the difference between the volume of the coating layer before expansion and after expansion divided by the volume before expansion.

According to an embodiment, whether the deformation error of the coating layer is within the preset error range may be determined to be outside the preset error range in the case where the deformation error value of the coating layer is greater than or equal to an arbitrary number. At this time, an arbitrary number may be set by the user and input through the processor 100.

In the step (S4320) of correcting the structural deformation error of the coating layer, in the case where the deformation error of the coating layer is outside the preset error range, the swelling simulator 500 may change the allocation group of voxels located on the surface of the coating layer. For example, in the case where the volume of the coating layer increases excessively after expansion and the deformation error exceeds the preset error range, the swelling simulator 500 may reduce the deformation error by changing the property allocated to the voxels located on the surface of the coating layer to a separator or a pore, thereby reducing the volume of the coating layer after expansion. That is, the present disclosure may correct the structural deformation of the three-dimensional separator structure caused by expansion simulation by increasing or decreasing the number of voxels corresponding to the coating layer.

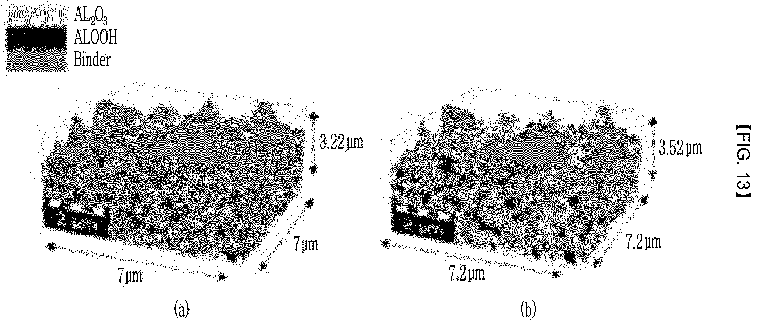

FIG. 13(a) is an example of the three-dimensional separator structure before swelling simulation, and FIG. 13(b) is the three-dimensional separator structure of FIG. 13(a) after swelling simulation.

That is, by using the three-dimensional separator structure formed through the swelling simulation step (S4000) according to an embodiment of the present disclosure, it is possible to confirm the change in the characteristics of the three-dimensional separator structure before and after swelling simulation, as shown in Table 2 below.

**(Table 2)**

| | Before swelling simulation | After swelling simulation |
|---|---|---|
| Coating layer thickness (µm) | 3.22 | 3.52 |
| Coating layer porosity (%) | 49.52 | 63.82 |
| Pore D50 size within coating layer (nm) | 500 | 600 |
| Tortuosity of coating layer | 5.878 | 2.138 |

A method of calculating the shape parameters of the three-dimensional separator structure according to an embodiment of the present disclosure may further include shape parameters calculation step in the method of forming the three-dimensional separator structure described above.

In the shape parameters calculation step, the processor 100 may receive the physical property parameters for the three-dimensional separator structure, and may calculate the shape parameters for the three-dimensional separator structure formed by the method of forming the three-dimensional separator structure described above using the input physical property parameters.

Here, the physical property parameters are variables necessary to derive the shape parameters, and the processor 100 may receive the physical property parameters from the outside through a user terminal or the like, or the processor 100 may obtain the physical property parameters from the three-dimensional separator structure formed by the method described above.

Additionally, the shape parameters may include the porosity, pore radius, and ion tortuosity of the separator, and the porosity, pore radius, and ion tortuosity of the coating layer.

At this time, conventionally known arts may be used to calculate the shape parameters from the physical property parameter. For example, the pore radius may be calculated based on the watershed algorithm, the porosity may be calculated based on voxel statistical analysis, and the ion tortuosity may be calculated based on Ohm's law partial differential equation calculations.

Meanwhile, the above-described method may be written with a program that can be executed on a computer, and may be implemented on a general-purpose digital computer that operates the program using computer-readable recording media. The computer-readable recording media may include a storage medium such as a magnetic storage medium such as a ROM, a RAM, a USB, a floppy disk, a hard disk, or an optical readable medium such as a CD-ROM or a DVD.

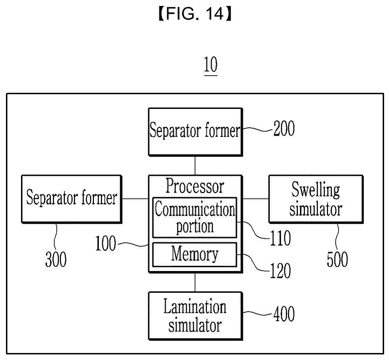

FIG. 14 is a block diagram of a device for forming the three-dimensional separator structure and a device for calculating the shape parameters of the three-dimensional separator structure according to an embodiment of the present disclosure.

Referring to FIG. 14, a device for forming a three-dimensional separator structure 10 according to an embodiment of the present disclosure may include the processor 100, the separator former 200, the coating layer former 300, the lamination simulator 400, and the swelling simulator 500.

The processor 100 may determine whether the formation of the coating layer is necessary, whether the lamination simulation is necessary, and whether the swelling simulation is necessary based on the design parameters or the machine parameters.

According to an embodiment, the processor 100 may further include a communication portion 110 and a memory 120.

The communication portion 110 is a component necessary for the processor 100 to communicate with the separator former, the coating layer former, the lamination simulator, the swelling simulator, or an external upper controller. Any communication portion 110 may be used as long as it supports communication between two different devices.

There is no particular limitation on the type of the memory 120 as long as it is a storage medium that can record, erase, and maintain information. Depending on the embodiment, the memory 120 may be a RAM, a ROM, or a register. Additionally, the memory 120 may be electrically connected to the processor 100 via-for example, a data bus-so that it can be accessed by the processor 100.

The separator former 200 may determine the size of the domain and voxels based on the design parameters and use the polyethylene separator weaving algorithm or the polypropylene separator weaving algorithm based on components of the separator structure and whether the separator structure is multi-layered to form a separator within the domain.

According to an embodiment, the separator former 200 may select either the polyethylene separator weaving algorithm or the polypropylene separator weaving algorithm based on the components of the separator structure in the case where the separator structure is single-layered, and form the separator using the selected algorithm and the design parameters.

According to an embodiment, the separator former 200 may form the polyethylene separator using the polyethylene separator weaving algorithm in the case where the separator structure is multi-layered, form the polypropylene separator using the polypropylene separator weaving algorithm, and form the separator structure by laminating the polypropylene separator on the polyethylene separator.

Here, the polyethylene separator weaving algorithm may form the polyethylene separator with a fiber structure shape based on the design parameters, and in the case where the formation error is outside the preset error range, may reform the polyethylene separator by changing the conditions related to the formation of the polyethylene separator.

The polypropylene separator weaving algorithm may form the polypropylene separator based on the design parameters and form a micro-level spheroidal pore in the polypropylene separator, and form a nano-level long spherical pore in the polypropylene separator having the spheroidal pore formed based on the design parameters.

In addition, the polypropylene separator weaving algorithm may reform the spheroidal pore by changing the conditions related to the formation of the spheroidal pore until the formation error of the polypropylene separator in which the spheroidal pore is formed falls within the preset error range. That is, the polypropylene separator weaving algorithm may reform the long spherical pore by changing the conditions related to the formation of the long spherical pore until the formation error of the polypropylene separator in which the long spherical pore is formed falls within the preset error range.

The coating layer former 300 may generate ceramic particles and the binder within the domain using the design parameters, and laminate the ceramic particles and the binder on the separator to form the coating layer.

According to an embodiment, the coating layer former 300 may regenerate the ceramic particles by changing the conditions related to the generation of the ceramic particles in the case where the formation error of the ceramic particles is outside the preset error range.

According to an embodiment, the coating layer former 300 may, in the case where the binder is generated outside the pore formed within the coating layer, remove the binder generated outside the pore, and change the conditions related to the generation of the binder to regenerate the binder.

According to an embodiment, the coating layer former 300 may gradually grow the binder generated within the pore, and in the case where the grown binder is generated outside the pore or the formation error of the grown binder does not fall within the preset error range, may remove the volume of the grown binder, change the growth direction of the binder, and regrow the binder.

The lamination simulator 400 may simulate rolling of the separator using the machine parameters and correct the deformation error of the rolled separator to simulate lamination.

Here, in the case where the deformation error of the rolled separator is outside the preset error range, the lamination simulator 400 may correct the volume of the separator after the rolling simulation based on the volume difference of the separator before and after rolling.

The swelling simulator 500 may simulate expansion of the coating layer by using the swelling factor and the machine parameters and correct the deformation error of the expanded coating layer to simulate swelling.

Here, the swelling simulator 500 may correct the volume of the coating layer after the expansion simulation based on the difference in the volume of the coating layer before and after the expansion in the case where the deformation error of the expanded coating layer is outside the preset error range.

In a device for calculating the shape parameters of the three-dimensional separator structure 10 formed by the device for forming the three-dimensional separator structure 10 described above according to an embodiment of the present disclosure, the processor 100 may calculate the shape parameters for the three-dimensional separator structure using physical property parameters input for the three-dimensional separator structure.

The device for calculating the shape parameters of the three-dimensional separator structure 10 according to an embodiment of the present disclosure is a device for calculating the shape parameters of the three-dimensional separator structure formed by the device for forming the three-dimensional separator structure 10 described above, which may include the same configuration as the device for forming the three-dimensional separator structure 10 described above, and the processor 100 of the device for calculating the shape parameters of the three-dimensional separator structure 10 may receive the physical property parameters for the three-dimensional separator and calculate the shape parameters for the three-dimensional separator structure using the physical property parameters.

The scope of the present disclosure is defined by the following claims rather than by the detailed description of the embodiments, and it should be understood that all modifications and embodiments conceived from the meaning and scope of the claims and their equivalents are included in the scope of the present disclosure.

## Claims

1. A method of forming a three-dimensional separator structure, comprising:
a separator former determining the size of a domain and voxels based on design parameters input into a processor for a separator structure;
selecting at least one of a polyethylene separator weaving algorithm and a polypropylene separator weaving algorithm based on components of the separator structure and whether the separator structure is multi-layered; and
forming a separator within the domain using the selected algorithm and the design parameters.

2. The method of forming the three-dimensional separator structure of claim 1, wherein
the selecting of the algorithm comprises
selecting one of the polyethylene separator weaving algorithm and the polypropylene separator weaving algorithm based on the components of the separator structure in the case where the separator structure is single-layered.

3. The method of forming the three-dimensional separator structure of claim 1, wherein
the selecting of the algorithm comprises
selecting the polyethylene separator weaving algorithm and the polypropylene separator weaving algorithm in the case where the separator structure is multi-layered,
and the forming of the separator comprises
forming a polyethylene separator using the polyethylene separator weaving algorithm; forming a polypropylene separator using the polypropylene separator weaving algorithm; and laminating the polypropylene separator on the polyethylene separator to form the separator.

4. The method of forming the three-dimensional separator structure of claim 1, wherein
the forming of the separator comprises
in the case where the selected algorithm is the polyethylene separator weaving algorithm,
forming a polyethylene separator with a fiber structure shape based on the design parameters;
determining whether a formation error of the polyethylene separator is within a preset error range; and
in the case where the formation error is outside the preset error range, reforming the polyethylene separator by changing the conditions related to the formation of the polyethylene separator.

5. The method of forming the three-dimensional separator structure of claim 1, wherein
the forming of the separator comprises
in the case where the selected algorithm is the polypropylene separator weaving algorithm,
forming a polypropylene separator based on the design parameters and forming a micro-level spheroidal pore in the polypropylene separator;
reforming the spheroidal pore by changing the conditions related to the formation of the spheroidal pore until the formation error of the polypropylene separator in which the spheroidal pore is formed falls within the preset error range;
forming a nano-level long spherical pore in the polypropylene separator having the spheroidal pore formed based on the design parameters; and
reforming the long spherical pore by changing the conditions related to the formation of the long spherical pore until the formation error of the polypropylene separator in which the long spherical pore is formed falls within the preset error range.

6. The method of forming the three-dimensional separator structure of claim 1, further comprising:
the processor determining whether formation of a coating layer is necessary based on the design parameters; and
in the case where it is determined that the formation of the coating layer is necessary, a coating layer former generating ceramic particles and a binder within the domain using the design parameters, and laminating the ceramic particles and the binder on the separator to form the coating layer.

7. The method of forming the three-dimensional separator structure of claim 6, wherein
the forming of the coating layer comprises
determining whether the formation error of the ceramic particles is within the preset error range; and
in the case where the formation error of the ceramic particles is outside the preset error range, regenerating the ceramic particles by changing the conditions related to the generation of the ceramic particles.

8. The method of forming the three-dimensional separator structure of claim 6, wherein
the forming of the coating layer comprises
determining whether the binder is generated within a pore formed within the coating layer, and in the case where the binder is generated outside the pore, removing the binder generated outside the pore, and changing the conditions related to the generation of the binder to regenerate the binder; and
gradually growing the binder generated within the pore, and in the case where the grown binder is generated outside the pore or the formation error of the grown binder does not fall within the preset error range, removing the volume of the grown binder, changing the growth direction of the binder, and regrowing the binder.

9. The method of forming the three-dimensional separator structure of claim 1, further comprising:
the processor determining whether lamination simulation is necessary based on machine parameters input for the separator structure;
in the case where the lamination simulation is necessary, a lamination simulator simulating rolling of the separator using the machine parameters; and
in the case where the deformation error of the rolled separator is outside the preset error range, correcting the volume of the separator after the rolling simulation based on the volume difference of the separator before and after rolling.

10. The method of forming the three-dimensional separator structure of claim 1, further comprising:
the processor determining whether swelling simulation is necessary based on the machine parameters input for the separator structure;
in the case where the swelling simulation is necessary, the swelling simulator simulating expansion of the coating layer using the swelling factor and the machine parameter; and
in the case where the deformation error of the expanded coating layer is outside the preset error range, correcting the volume of the coating layer after the simulating of the expansion based on the difference in the volume of the coating layer before and after the expansion.

11. A method of calculating shape parameters of a three-dimensional separator structure formed by any one of the methods of claims 1 to 10, further comprising:
the processor calculating the shape parameters for the three-dimensional separator structure using physical property parameters input for the three-dimensional separator structure.

12. A device for forming a three-dimensional separator structure, comprising:
a processor that determines whether a coating layer is necessary, whether a lamination simulation is necessary, and whether a swelling simulation is necessary based on design parameters and machine parameters;
a separator former that determines the size of a domain and voxels based on the design parameters and uses a polyethylene separator weaving algorithm or a polypropylene separator weaving algorithm based on components of the separator structure and whether the separator structure is multi-layered to form a separator within the domain;
a coating layer former that generates ceramic particles and a binder within the domain using the design parameters, and laminating the ceramic particles and the binder on the separator to form the coating layer;
a lamination simulator that simulates rolling of the separator using the machine parameters and corrects the deformation error of the rolled separator to simulate lamination; and
a swelling simulator that simulates expansion of the coating layer by using a swelling factor and the machine parameters and corrects the deformation error of the expanded coating layer to simulate swelling.

13. The device for forming the three-dimensional separator structure of claim 12, wherein
the separator former
selects one of the polyethylene separator weaving algorithm and the polypropylene separator weaving algorithm based on the components of the separator structure in the case where the separator structure is single-layered,
and forms the separator using the selected algorithm and the design parameters.

14. The device for forming the three-dimensional separator structure of claim 12, wherein
the separator former,
in the case where the separator structure is multi-layered,
forms a polyethylene separator using the polyethylene separator weaving algorithm, forms a polypropylene separator using the polypropylene separator weaving algorithm, and laminates the polypropylene separator on the polyethylene separator to form the separator.

15. The device for forming the three-dimensional separator structure of claim 12, wherein
the polyethylene separator weaving algorithm
forms a polyethylene separator with a fiber structure shape based on the design parameters, and in the case where the formation error is outside the preset error range, reforms the polyethylene separator by changing the conditions related to the formation of the polyethylene separator.

16. The device for forming the three-dimensional separator structure of claim 12, wherein
the polypropylene separator weaving algorithm
forms a polypropylene separator based on the design parameters and forms a micro-level spheroidal pore in the polypropylene separator,
and forms a nano-level long spherical pore in a polypropylene separator having the spheroidal pore formed based on the design parameters.

17. The device for forming the three-dimensional separator structure of claim 16, wherein
the polypropylene separator weaving algorithm
reforms the spheroidal pore by changing the conditions related to the formation of the spheroidal pore until the formation error of the polypropylene separator in which the spheroidal pore is formed falls within a preset error range.

18. The device for forming the three-dimensional separator structure of claim 16, wherein
the polypropylene separator weaving algorithm
reforms the long spherical pore by changing the conditions related to the formation of the long spherical pore until the formation error of the polypropylene separator in which the long spherical pore is formed falls within a preset error range.

19. The device for forming the three-dimensional separator structure of claim 12, wherein
the coating layer former,
in the case where the formation error of the ceramic particles is outside the preset error range, regenerates the ceramic particles by changing the conditions related to the generation of the ceramic particles.

20. The device for forming the three-dimensional separator structure of claim 12, wherein
the coating layer former,
in the case where the binder is generated outside the pore formed within the coating layer, removes the binder generated outside the pore, and changes the conditions related to the generation of the binder to regenerate the binder.

21. The device for forming the three-dimensional separator structure of claim 12, wherein
the coating layer former
gradually grows the binder generated within the pore, and in the case where the grown binder is generated outside the pore or the formation error of the grown binder does not fall within a preset error range, removes the volume of the grown binder, changes the growth direction of the binder, and regrows the binder.

22. The device for forming the three-dimensional separator structure of claim 12, wherein
the lamination simulator,
in the case where the deformation error of the rolled separator is outside the preset error range, corrects the volume of the separator after the rolling simulation based on the volume difference of the separator before and after rolling.

23. The device for forming the three-dimensional separator structure of claim 12, wherein
the swelling simulator,
in the case where the deformation error of the expanded coating layer is outside the preset error range, corrects the volume of the coating layer after the simulating of the expansion based on the difference in the volume of the coating layer before and after the expansion.

24. A device for calculating shape parameters of a three-dimensional separator structure formed by a device according to any one of claims 12 to 23, wherein
the processor
calculates the shape parameters for the three-dimensional separator structure using physical property parameters input for the three-dimensional separator structure.
